# EUROPEAN PATENT APPLICATION

(11) **EP 4 851 016 A1**
(43) Date of publication of application: **09.12.2026**
(21) Application number: 26183298.4
(22) Date of filing: 05.06.2026
(51) Int. Cl.: B62B 9/08

(54) **A BRAKE ASSEMBLY FOR A PUSHCHAIR**

(30) Priority: 06.06.2025 GB 202508954
(71) Applicant: Mamas & Papas (Holdings) Limited, West Yorkshire, HD5 0RH (GB)
(72) Inventor: HARGREAVES, Nichola, Leanne, Huddersfield, HD5 0RH (GB)
(74) Representative: Haseltine Lake Kempner LLP

(57) **Abstract**

A brake assembly for a pushchair is provided. The brake assembly comprises: an actuator pedal; a brake rotor arranged for rotation about a rotor axis, wherein the brake rotor comprises a cam feature; a brake carriage comprising a brake feature, wherein the brake carriage is movably supported within the brake assembly to be movable relative to the brake rotor in a direction with a component in a radial direction relative to the rotor axis, wherein the brake carriage comprises a complementary cam feature configured to engage the cam feature of the brake rotor, wherein the actuator pedal is configured to engage the brake rotor when the actuator pedal is actuated and rotate the brake rotor through a predetermined angle, and wherein the cam feature and complementary cam feature are configured to engage one another such that the brake carriage is moved alternatingly between a first position, in which the brake feature is configured to be disengaged from a recess formed in a wheel of the pushchair, and a second position, in which the brake feature is configured to engage the recess in the wheel, when, e.g. each time, the actuator pedal is actuated. A pushchair comprising the brake assembly is also provided.

## Description

### Technical Field

The present disclosure relates to a brake assembly for a pushchair and a pushchair comprising the brake assembly.

### Background

Pushchairs are often used by parents or other users to transport children with them on a journey by foot, particularly when children are too young or are otherwise unable to walk for all of part of the journey. The pushchair typically provides a comfortable seat or cot for the child to sit or lie in. The pushchair seat or cot is supported by a pushchair frame having a handle or handle bar and plurality of wheels, so that the pushchair can be comfortably pushed along by the user.

Pushchairs typically comprise a brake assembly configured to controllably brake one or more wheels of the pushchair in order to prevent the pushchair from moving when not desired.

It is desirable to provide an improved brake assembly for a pushchair.

### Statements of Invention

According to an aspect of the present disclosure, there is provided a brake assembly for a pushchair, wherein the brake assembly comprises: an actuator pedal; a brake rotor supported within the brake assembly for rotation about a rotor axis, wherein the brake rotor comprises a cam feature comprising a plurality of brake engagement portions and a brake disengagement portion spaced alternatingly about the rotor axis of the brake rotor; and a brake carriage comprising a brake feature, wherein the brake carriage is movably supported within the brake assembly in order to move slideably relative to the brake rotor in a radial direction relative to the rotor axis, wherein the brake carriage comprises a complementary cam feature configured to engage the cam feature of the brake rotor, at a position on the cam features based on an angle of rotation of the brake rotor about the rotor axis, in order to move the brake carriage between a first position, in which the brake feature is configured to be disengaged from a recess formed in a wheel of the pushchair, and a second position in which the brake feature is configured to engage the recess in the wheel, wherein the actuator pedal is configured to engage the brake rotor when the actuator pedal is actuated in order to rotate the brake rotor between an angle at which the complementary cam feature engages the configured to engage one of the brake engagement portions and an angle at which the complementary cam feature engages a brake disengagement portion of the cam feature, wherein the cam feature and complementary cam feature are shaped such that rotation of the brake rotor between the one of the first set of angles and the one of the second set of angles causes the brake carriage to move in a radial direction relative to the rotor axis between the first and second position.

According to another aspect of the present disclosure, there is provided a brake assembly for a pushchair, wherein the brake assembly comprises: an actuator pedal; a brake rotor arranged for rotation about a rotor axis, wherein the brake rotor comprises a cam feature; a brake carriage comprising a brake feature, wherein the brake carriage is movably supported within the brake assembly to be movable relative to the brake rotor in a direction with a component in a radial direction relative to the rotor axis, wherein the brake carriage comprises a complementary cam feature configured to engage the cam feature of the brake rotor, wherein the actuator pedal is configured to engage the brake rotor when the actuator pedal is actuated and rotate the brake rotor through a predetermined angle, and wherein the cam feature and complementary cam feature are configured to engage one another such that the brake carriage is moved alternatingly between a first position, in which the brake feature is configured to be disengaged from a recess formed in a wheel of the pushchair, and a second position, in which the brake feature is configured to engage the recess in the wheel, when, e.g. each time, the actuator pedal is actuated.

The cam feature may comprise a plurality of brake engagement portions and a plurality of brake disengagement portions spaced alternatingly about the rotor axis. The adjacent brake engagement portions and the brake disengagement portions may be spaced apart from one another by the predetermined angle.

The complementary cam feature may be configured to engage the cam feature of the brake rotor at a position on the cam feature based on an angle of rotation of the brake rotor about the rotor axis.

The cam feature and complementary cam feature may be configured, e.g. shaped, such that when the complementary cam feature engages one of the brake engagement portions, the brake carrier is in the second position and when the complementary cam feature engages one of the brake disengagement portions, the brake carrier is in the first position.

The cam feature may protrude in an axial direction from an axial end surface of the brake rotor and wherein the complementary cam features are configured to engage the cam feature on an outside surface of the cam feature extending around the perimeter of the cam feature and perpendicular to the axial direction.

The brake engagement portions many comprise radially extending lobe shaped portions of the cam feature. Each of the brake engagement portions and the brake disengagement portions may comprise a cam surface portion arranged circumferentially about the brake rotor axis. A normal direction of the cam surface may comprise at least a component parallel with a radial direction at each location on the cam surface about the rotor axis. The cam feature may comprise 4 lobe/cycloid shaped protrusions.

The brake feature may be moveably relative to the brake carriage in a direction in which the brake carriage moves between the first position and the second position. The brake features may be resiliently biased in a direction away from the first position towards the second position.

The actuator pedal may be pivotally coupled to a brake housing, e.g. at an axis parallel or aligned with the rotor axis

The brake rotor may be at least partially received within the brake housing. The brake carriage may be at least partially received within the brake housing.

The brake assembly may further comprise a brake indicator coupled the brake carriage. The brake indicator may be configured to protrude through an opening in the brake housing when the brake carriage is in the second position.

The brake rotor may comprise a plurality of ratchet teeth spaced circumferentially about the rotor axis. The actuator pedal may comprise a rachet latch configured to engage one of the ratchet teeth to rotate the brake rotor through a predetermine angle when the actuator pedal is actuated.

The brake carriage may be biased into the first position.

A pushchair may comprise the above-mentioned brake assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. In particular, features described in relation to the second mentioned aspect may be combined with features of the other mentioned aspects.

### Brief Description of the Drawings

For a better understanding of the present invention, and to show more clearly how it may be carried into effect, reference will now be made, by way of example, to the accompanying drawings, in which:
Figure 1 is a front perspective view of a pushchair according to arrangements of the present disclosure;
Figure 2 is an exploded perspective view of a brake assembly for the pushchair;
Figure 3 is a perspective view of the brake assembly in an assembled condition;
Figure 4 is a side view of the brake assembly in an assembled condition;
Figures 5a and 5b, collectively referred to as Figure 5, are side views of the brake carriage of the brake assembly and a brake disc of a wheel of the pushchair with the brake carriage in the brake disengagement position and brake engagement position respectively;
Figure 6 is a perspective view of a brake actuator and brake rotor of the brake assembly;
Figures 7a and 7b, collectively referred to as Figure 7, are side views of the brake assembly and a brake rotor respectively, showing a brake carriage of the brake assembly in a brake disengagement position;
Figures 8a and 8b are side views of the brake assembly and the brake rotor respectively, showing a brake carriage of the brake assembly in a brake engagement position; and
Figure 9 is a compound side view illustrating the brake assembly and a secondary brake assembly of the pushchair.

### Detailed Description

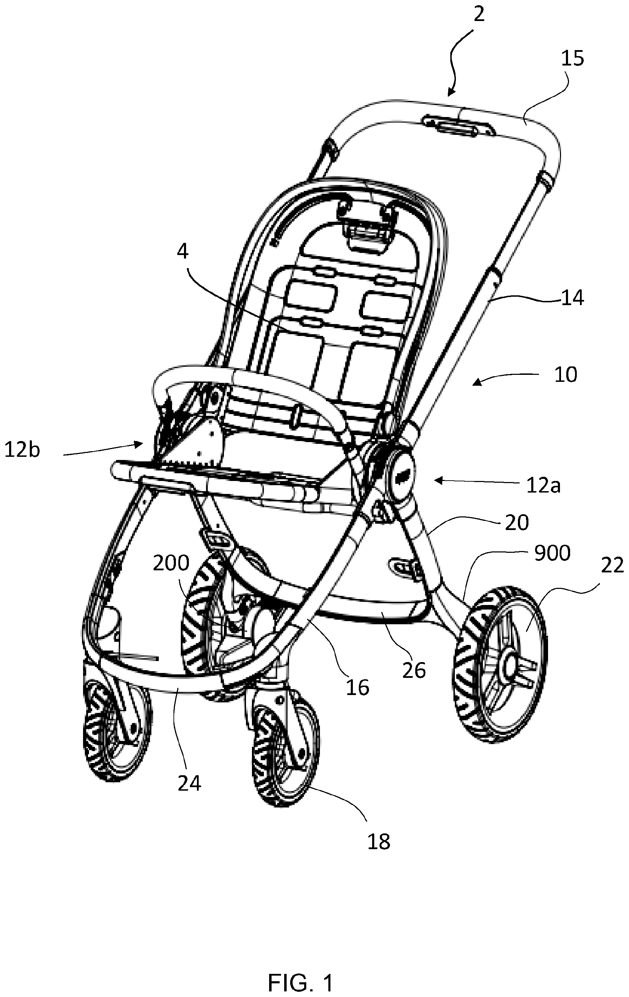

With reference to Figure 1, a pushchair 2 according to arrangements of the present disclosure comprises a pushchair frame 10 and a seat 4 for a child to sit or lie on, which is supported on the pushchair frame 10. In other arrangements, another type of attachment for a child to sit or lie on, such as a carrycot or car seat, may be supported on the pushchair frame 10 instead of the seat 4.

The pushchair frame 10 comprises a first pushchair hinge assembly 12a provided on a left side of the pushchair frame and a second pushchair hinge assembly 12b provided on a right side of the pushchair frame.

In the description below, features of the pushchair frame 10, and in particular, frame members of the pushchair frame and their connections with the pushchair hinge assembly 12a on one lateral side of the pushchair frame are described. However, it will be appreciated that the pushchair frame 10 may be symmetrical between left and right, lateral sides of the pushchair frame, and hence, a similar arrangement of components, such as frame members, may be provided on each lateral side of the pushchair frame 10.

The pushchair frame 10 may further comprise a handle frame member 14 extending, e.g. upwardly and/or rearwardly, from the pushchair hinge assembly 12a and a handlebar 15 extending between the distal end of the handle frame member 14 and the distal end of another handle frame member provided on the other lateral side of the pushchair frame. In other arrangements, the pushchair frame 10 may not comprise the handlebar extending between the handle frame members 14 and may instead comprise a handles, e.g. separate handles, coupled to the handle frame members 14 for the user to grip when pushing the pushchair.

The pushchair frame 10 further comprises a first leg frame member, e.g. a front leg frame member 16, extending from the pushchair hinge assembly 12a for supporting one or more front wheels 18 of the pushchair, and a second leg frame member, e.g. a rear leg frame member 20, extending from the pushchair hinge assembly 12a for supporting one or more rear wheels 22 of the pushchair.

The pushchair frame 10 may comprise a front lateral frame member 24 extending laterally between distal ends of the front leg frame members 16 provided on either lateral side of the pushchair frame. In some arrangements, the front lateral frame member 24 may be integrally formed with one or both of the front leg frame members 16. In such arrangements, a single frame member may extend from the pushchair hinge assembly 12a on one side of the pushchair frame to one of the front wheels 18, laterally across to the other of the front wheels 18, and from the other of the front wheels to the pushchair hinge assembly 12b on the other side of the pushchair frame.

Similarly, the pushchair frame 10 may comprise a rear lateral frame member 26 extending laterally between distal ends of the rear leg frame members 20. In some arrangements, the rear lateral frame member 26 may be integrally formed with one or both of the rear leg frame members 20. In such arrangements, a single frame member may extend from the pushchair hinge assembly 12a on one side of the pushchair frame to one of the rear wheels 22 laterally across to the other of the rear wheels 22, and from the other of the rear wheels to the pushchair hinge assembly 12b on the other side of the pushchair frame.

The pushchair frame 10 further comprises first and second, e.g. right and left, wheel hub assemblies 200, 900 coupled to the second leg frame members 20 and/or the rear lateral frame member on either lateral side of the pushchair. The rear wheels 22 of the pushchair may be mounted on the pushchair frame 10 by the first and second hub assemblies, which may support rotation of the rear wheels as the pushchair moves.

Further, as described in greater detail below, a brake assembly 300 for the pushchair, according to arrangements of the present disclosure, may be provided as part of one of the first and second wheel hub assemblies 200, 900, and a secondary brake assembly 901 may be provided in the other of the second and second wheel hub assembly, for controllably braking the rear wheels 22 of the pushchair. In the arrangement described herein, the first, e.g. right, wheel hub assembly 200 comprises the brake assembly 300 and the second, e.g. left, wheel hub assembly 900 comprises a secondary brake assembly 901. However, in other arrangements, the second, e.g. left, wheel hub assembly may comprise the brake assembly 210 and the first, e.g. right, wheel hub assembly may comprise the secondary brake assembly 901. Further in other arrangements, the brake assembly and secondary brake assembly described herein may be additionally or alternatively arranged to brake other wheels of the pushchair, such as the front wheel. For example, one or more further secondary brake assemblies may be provided for braking other wheels, such as front wheels, of the pushchair.

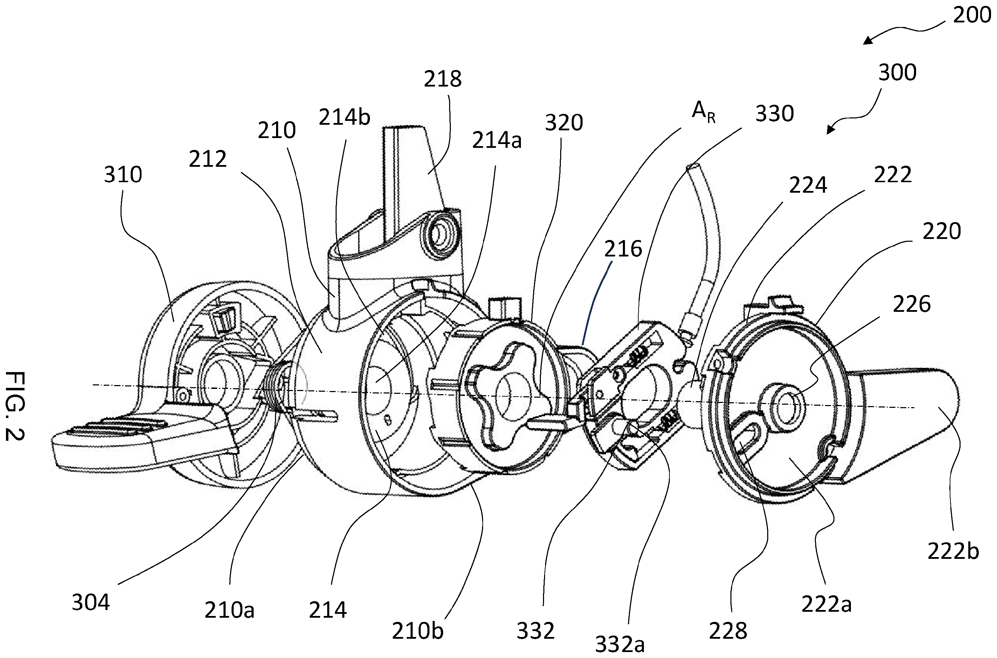

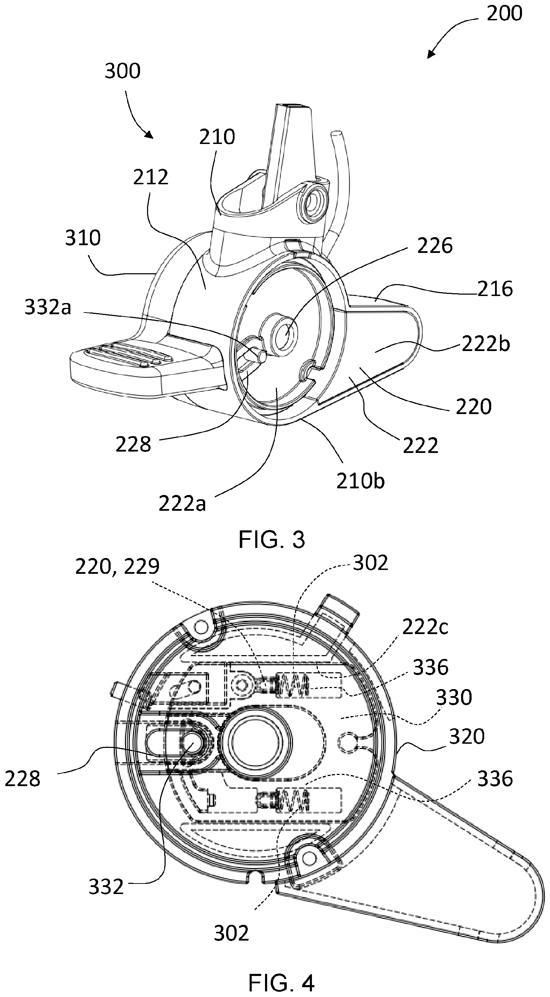

Referring now to Figures 2 and 3, the first hub assembly 200 may comprise a main housing 210 configured to couple to the one of the second leg frame members 20 and/or the rear lateral frame member 26, for example, on a first, e.g. right, lateral side of the pushchair.

The main housing 210 may comprise a tubular portion 212 and an axial end wall 214 formed at a first axial end 210a of the main housing for at least partially closing the tubular portion 212 at the first axial end. The tubular portion 212 may be open at a second axial end 210b opposite the first axial end. As illustrated, the tubular portion 212 may be substantially circular in cross-section, e.g. in a plane perpendicular to an axial/longitudinal direction of the main housing. The axial/longitudinal direction of the main housing may be aligned with a centreline of the substantially circular tubular portion 212.

The main housing 210 may further comprise a hollow extension portion 216 extending outwardly, e.g. radially outwardly, from the substantially circular tubular portion 212. The hollow extension portion 216 may be substantially triangular, or wedge shaped, e.g. having a cross-sectional shape which tapers, e.g. narrows, in a direction away from the tubular portion, e.g. in a plane perpendicular to an axial/longitudinal direction of the main housing. The hollow extension portion 216 may be closed at the first axial end 210a of the main housing. The hollow extension portion may comprise 216 an open side at the second axial end 210b of the main housing.

The main housing 210 may further comprise a frame coupling portion 218 for coupling to one of the second leg frame members 20 and/or the rear lateral frame member of the pushchair frame 10.

The first hub assembly 200 may further comprise an axel housing 220 configured to house a wheel axel of one of the rear wheels 22 of the pushchair supported by the first hub assembly. The axel housing 220 may be configured to couple to the main housing 210. In particular, the axel housing 220 may comprise a substantially plate shaped portion 222, which may be configured to couple to the main housing at a second axial end 210b, e.g. to form a second axial end wall of the main housing 210 at the second axial end 210b.

The plate shaped portion 222 may comprise a substantially circular part 222a, and an extension part 222b having a shape corresponding to the hollow extension portion 216, such that the plate shaped portion 222 of the axel housing is shaped to close the tubular portion 212 and the hollow extension portion 216 at the second axial end of the main housing. In particular, the plate shaped portion 222 may be configured to be received inside tube walls of the tubular portion and the extension portion of the main housing at the second axial end. As illustrated, the substantially circular part 222a and the extension part 222b of the plate shaped portion may be generally disposed in planes offset from one another in the axial direction of the main housing. For example, the circular part 222a may be offset from the extension part 222b to be recesses inside the tubular portion 212 of the main housing and the extension part 222b may be aligned with, or closer to, the second axial end.

The axel housing 220 may further comprise an axel support portion 224 extending from the plate shaped portion 222. The axel support portion may be substantially cylindrical. A centreline of the axel support portion 224 may be perpendicular to the plate shape portion 222. An axel bore 226 may be formed though the plate shaped portion 222 and the axel support portion 224. A centreline of the axel bore 226 may be aligned with a centreline of the cylindrical axel support portion 224. The axel bore 226 may be configured to receive an axel of a rear wheel of the pushchair for rotatably supporting the rear wheel on the hub assembly 200.

When the axel housing 220 is coupled to the main housing, the centreline of the axel bore 226 may be aligned with the centreline of the tubular portion 212 of the main housing.

As illustrated, a bore 214a may be formed in the axial end wall 214 of the of the main housing for receiving the axel support portion of the axel housing at the second axial end 210a of the main housing, in order to support the axel housing, and thereby support the wheel axel, at the second axial end of the main housing.

The hub assembly 200 further comprises the brake assembly 300 according to arrangements of the present disclosure. As described in greater detail herein, components of the brake assembly 300 may be mounted on and at least partially received within the main housing 210 of the hub assembly, which may therefore be alternatively referred to as a brake housing.

The brake assembly 300 comprises an actuator pedal 310, a brake rotor 320 and a brake carriage 330. As described in greater detail herein, the brake rotor 320 is arranged for rotation about a rotor axis A_{R}, which may be aligned with the centre line of the tubular portion 212 of the main housing (and therefore with the axis of the wheel supported by the hub assembly 200).

As illustrated, the actuator pedal 310 may be arranged at least partially, e.g. predominantly, outside the brake housing 210 and may be positioned adjacent to the axial end wall 214. The brake rotor 320 and the brake carriage 330 may be received at least partially inside the brake housing 210.

The brake carriage 330 comprises a brake feature 332. As illustrated, the brake feature 332 may comprise a pin, e.g. a cylindrical pin, protruding from the brake carriage 332 in a direction parallel with the rotor axis A_{R}. As shown in Figure 3, the brake feature 322 may protrude through a slot 228 formed in the axel housing 220, e.g. in the plate shaped portion 222. As mentioned above, the substantially circular part 222a of the plate shaped portion may be recessed from the second axial end of the cylindrical portion of the brake housing, so that a distal end 332a of the brake feature 332 is inside tubular portion of the brake housing.

The brake carriage 330 is movably supported within the brake assembly, in order to be movable, e.g. slideable, relative to the brake rotor 320 in a direction with a component, e.g. a principal component, in a radial direction relative to the rotor axis A_{R}. However, the brake carriage may be prevented from rotating about an axis parallel with the rotor axis and/or the centreline of the brake housing. For example, as depicted in Figure 4, the brake carriage 330 may be received within a channel 222c formed in the axel housing, such that the brake carriage is slidably coupled to the axel housing.

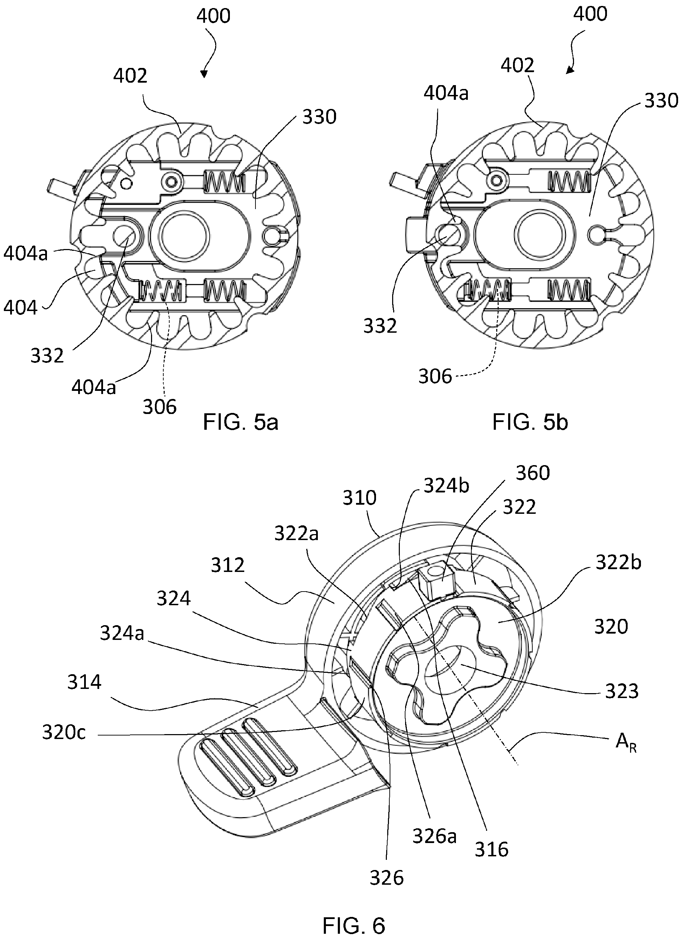

As illustrated in Figures 5a and 5b, the brake carriage 330 is movable between a first position (shown in Figure 5a), in which the brake feature 332 is configured be disengaged from a recess 404 formed in a wheel 400 of the pushchair, and a second position (shown in Figure 5b), in which the brake feature 332 is configured to engage the recess 404 in the wheel. As shown in Figure 4a and 4b, the wheel, e.g. a brake disk 402 or hub portion of the wheel, may comprise a plurality of the recesses 404 spaced circumferentially around the wheel. The recesses 404 may be open at a radially inner side of the recesses, so that the brake feature can move into and out of the recesses in a radial direction of the wheel. Side walls 404a of the recesses may extend in a direction with a component in the radial direction of the wheel. Accoridngly, when the brake feature 332 is received within the recess 404, the brake feature may engage the side walls 404a of the recess to prevent rotation of the wheel relative to the brake housing 210.

Referring back to Figure 4, the brake carriage 330 may be biased into the first position. As illustrated, the brake assembly 300 may comprise one or more first resilient elements 302, such as coil springs, arranged between the brake carriage 230 and the axel housing 220 to bias the brake carriage into the first position. In particular, as shown in Figure 4, the brake carriage 230 may comprise one or more bias openings 336 or recesses configured to receive the first resilient elements. Bias bosses 229 formed on the axel housing may protrude into the bias openings 336 in the brake carriage. The bias openings may be elongate in a direction in which the brake carriage moves between the first and second positions to accommodate the bias bosses when the brake carriage is in the first and second positions. The first resilient elements 302 may be disposed between the bias bosses and an interior wall of the bias opening. In the arrangement shown in Figure 4, the brake carriage 230 comprises a pair of bias openings 336, which are spaced apart from one another in a direction perpendicular to the direction in which the brake carriage moves between the first and second positions, and bias bosses 229 of the axel housing and first resilient elements 302 are received in the two spaced apart bias openings.

Referring now to Figure 6 in addition to Figure 2 and 3, the actuator pedal 310 may comprise a body portion 312 and a pedal portion 314. As illustrated, the body portion may be substantially cylindrical and may have a cross-sectional shape substantially corresponding to the brake housing 210, e.g. the tubular portion of the brake housing, in a plane perpendicular to the rotor axis A_{R}. As mentioned above, the actuator pedal 310 may be arranged adjacent to the axial end wall 214 of the main housing 210 and may be movably coupled to the main housing at the axial end wall, such that the actuator pedal is rotatably relative to the main housing about the brake rotor axis A_{R}. The pedal portion 314 may comprise a substantially wedge or plate shaped portion extending radially outward from the body portion 312 to be engaged by a user of the pushchair, e.g. using their foot, in order for the user to urge the actuator pedal 310 to rotate relative to the brake housing 210.

As shown in Figure 6, the brake rotor 320 comprises a substantially cylindrical body portion 322. A central axis of the body portion 322 may be aligned with the rotor axis A_{R}. The brake rotor 320 may comprise an axel bore 323 formed through the body portion 322. The axel bore may be aligned with the rotor axis and may be configured to receive the axel support portion 224 of the axel housing and/or the axel of the rear wheel supported by the hub assembly 200. The brake rotor 320 may be supported by the axel support portion of the axel housing and/or the axel of the rear wheel at the axel bore for rotation within the brake housing 210 about the rotor axis A_{R}. The body portion 322 of the brake rotor may comprise a first axial end face 322a facing the actuator pedal 310 and a second axial end face 322b on an opposite end of the body portion.

A plurality of ratchet teeth 324 may be formed on the first axial end face 322a of the brake rotor. The ratchet teeth may protrude outwardly from the first axial end face 322a, e.g. towards the actuator pedal. The ratchet teeth 324 may be spaced apart from one another circumferentially around the first axial end face. Further, the ratchet teeth, e.g. the individual ratchet teeth may extend circumferentially around the brake rotor, such that a height of a ramp surface 324a of the ratchet teeth from the first axial end face (e.g. in a direction parallel with the rotor axis) increases along the ratchet teeth in the circumferential direction of the brake rotor up to a step face 324b of the ratchet teeth extending from the ramp surface to the first axial end face in the axial direction of the brake rotor.

The actuator pedal 310 further comprises a ratchet latch 316 which may protrude from the body portion 312 of the actuator pedal towards the brake rotor 320. The ratchet latch 316 may be configured to engage one of the ratchet teeth 324 on the brake rotor when the actuator pedal is actuated by a user, e.g. rotated about the rotor axis A_{R}, to cause the brake rotor to rotate together with the actuator pedal.

The ratchet latch 316 may be configured to extend through an arcuate slot 214b formed in the first axial end wall 214 of the main housing 210 to engage the ratchet teeth 324 of the brake rotor. The arcuate slot 214b may extend circumferentially about the rotor axis by an actuation angle. Due to the ratchet latch extending through the actuate slot, the actuator pedal may be restricted to be rotated between a neutral position, in which the ratchet latch is arranged at a first end of the arcuate slot, and an actuated position, in which the ratchet latch is arranged at a second end of the arcuate slot. The actuator pedal 310 and the brake rotor 320 may be configured such that as the actuator pedal is actuated, e.g. moved, from the neutral position to the actuated position, the ratchet latch 316 engages the ratchet teeth 324 on the brake rotor to rotate the rotor through a predetermined ratchet angle. The ratchet teeth 324 on the brake rotor may be angularly spaced apart from one another around the brake rotor by the predetermined angle. The predetermined angle may be less than or equal to the actuation angle.

The brake assembly 300 may further comprise an second/actuator resilient element 304, such as a torsional spring, configured to bias the actuator pedal 310 into the neutral position. The actuator pedal 310, e.g. the ratchet latch, the brake rotor, e.g. the ratchet teeth, and/or one or more further components of the brake assembly may be together configured such that the brake rotor 320 is not caused to rotate when the actuator pedal moves towards the neutral position. For example, the ratchet latch 316 may be moveably mounted on the actuator pedal 310 and the ramp surface 324a of the ratchet teeth may urge the ratchet latch 316 to move relative to the brake rotor in order to move past the ratchet teeth as the actuator pedal moves towards the first position, without urging the brake rotor to rotate.

As illustrated, the brake assembly 300 may further comprise a brake rotor latch 360, which may be mounted, e.g. movably mounted, on the brake housing 210. The brake rotor latch 360 may be configured to engage an outer cylindrical surface 320c of the brake rotor. The brake rotor may further comprise a plurality of ratchet recesses 326 formed in the outer cylindrical surface 320c about the brake rotor, which may be engaged by the brake rotor latch 360 in order to resist rotation of the brake rotor as the actuator pedal moved towards the first position. The ratchet recesses 326 may be spaced apart from one another by the predetermined angle so that the angular separation of the ratchet recess is the same as the angular separation of the ratchet teeth 324 about the rotor axis A_{R}. A ramp surface 326a formed inside the ratchet recesses 326 may be configured to urge the brake rotor latch 360 out of the ratchet recess when the brake rotor is urged to rotate as the actuator pedal moves towards the actuated position.

In the manner detailed above, or otherwise, the brake assembly 300 may be configured such that the brake rotor 320 is configured to rotate through the predetermined angle each time the actuator pedal 310 is actuated, e.g. moved from the neutral position to the actuated position, and optionally, such that the brake rotor remains stationary, e.g. without rotating, when the actuator pedal 310 returns to the neutral position, e.g. under the action of the actuator resilient element.

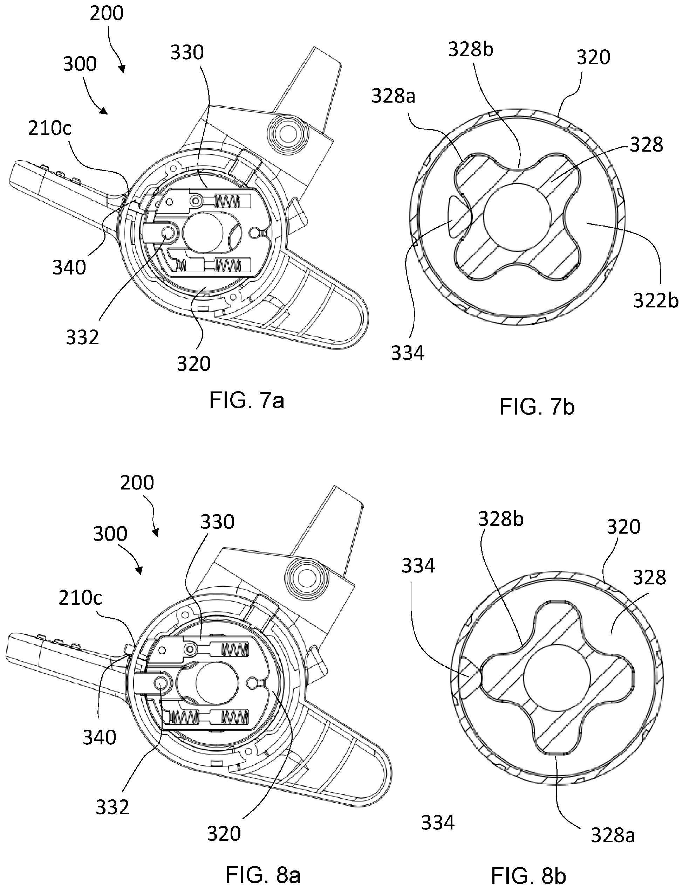

Referring now to Figures 7 and 8, in addition to Figure 6, the brake rotor 320 further comprises a cam feature 328. The cam feature 328 may be formed on the second axial end face 322b of the brake rotor. In particular, the cam feature 328 may comprise a projection, projecting from the second axial end face in a direction with a component aligned with the rotor axis, e.g. normal to the second axial end face. The cam feature 328 may project from the body portion of the brake rotor towards the brake carriage 330.

The brake carriage 330 further comprises a complementary cam feature 334 configured to engage the cam feature 328 formed on the brake rotor. More particularly, the cam feature 328 and complementary cam feature 334 are configured to engage one another such that the brake carriage is cause to move alternatingly between the first position and the second position, when, e.g. each time, the actuator pedal is actuated, e.g. moved from the neutral position to the actuated position.

As shown in Figures 7 and 8, the complementary cam feature 334 may comprise a projection formed on the brake carriage, e.g. on a surface of the brake carriage facing the brake rotor 320. The complementary cam feature 334 may be configured to engage the cam feature 328 at an outside surface of the cam feature, e.g. extending around the perimeter of the protrusion forming the cam feature, which is normal to a direction having at least a component perpendicular to the rotor axis. In the arrangement shown, the complementary cam feature 334 is configured to engage the cam feature 328 at a surface of the cam feature which is normal to a direction perpendicular to the rotor axis.

The complementary cam feature 334 may be configured to engage the cam feature 328 at a position on the cam feature, e.g. around the perimeter of the cam feature, based on the angle of rotation or the brake rotor 320 about the rotor axis. Accoridngly, a distance between an engagement position at which the complementary cam feature engages the cam feature and the rotor axis, e.g. a radius of the engagement position, may determine the position of the brake carriage 330 between the first and second positions.

The cam feature 328 may comprise a plurality of brake engagement portions 328a and a plurality of brake disengagement portions 328b spaced alternating around the rotor axis A_{R}. In particular, the brake engagement portions 328a may comprise portions of the outer surface of the protrusion forming the cam feature having a greater radius relative to the rotor axis compared to to portions of the outer surface forming the brake disengagement portions 328b. The brake engagement portions and brake disengagement portions may be configured such that the brake carrier 330 is arranged in the first position when the complementary cam feature engages that cam feature at one of the brake disengagement portions, and the brake carrier is arranged in the second position when the complementary cam feature engages that cam feature at one of the brake engagement portions. The brake engagement portions and brake disengagement portions may be spaced apart from one another by the predetermined angle around the rotor axis A_{R}. Further, the cam feature 328 and complementary cam feature 334 may be configured such that rotating the brake rotor 320 about the rotor axis A_{R} causes the brake carriage 330 to move alternatingly between the first position and the second position. In particular, the brake carriage 330 may be urged to move from the first position to the second position due to the engagement between the cam features and the complementary cam feature and may return to the first position under the action of the one or more first resilient elements, as described above.

As illustrated, the cam feature 328, e.g. the protrusion forming the cam feature, may have a hypocycloid shape, e.g. a rounded hypocycloid shape, comprising 4 cycloid/lobe shaped portions. The brake engagements portions may be formed by cusps of the hypocycloid shape having a greatest radius from the rotor axis, e.g. peaks of the hypocycloid shape, and the brake disengagement portions may be formed by cusps of the hypocycloid shape having smallest radius from the rotor axis, e.g. troughs/valleys in the hypocycloid shape.

The brake assembly 300 may further comprise a brake indicator 340. The brake indicator may be coupled to the brake carriage and may extend from the brake carriage towards the tube wall of the brake housing. More particularly, the brake indicator 340 may be configured, e.g. shaped and coupled to the brake carriage, to protrude through a brake indicator opening 210c formed in the brake housing 210 when the brake carriage is in the second position, e.g. so that the brake indicator 340 is visible outside the brake housing. The brake indicator 340 may similarly be configured so as not to protrude through a brake indicator opening 210c when the brake carriage is in the first position, e.g. so that the brake indicator 340 is not visible outside the brake housing. In this way, the brake indicator 340 may provide a visible indication to a user when the brake carriage is in the second position, e.g. to indicate that the brake feature 332 is engaged with the wheel.

Referring once again the Figures 5a and 5b, the brake feature 332 may be movably coupled to the brake carriage 330. In particular, the brake feature may be movable in a direction with at least a component in the direction between the first and second positions of the brake carriage 330. The brake feature 332 may be biased in a direction towards the second position of the brake carriage, e.g. towards the recess 404 in the wheel with which the brake feature 332 may engage when the brake carriage moves towards the second position. For example, the brake assembly may comprise a third resilient element 306 configured to resiliently bias the brake feature 332 relative to the brake carriage in the direction towards the second position.

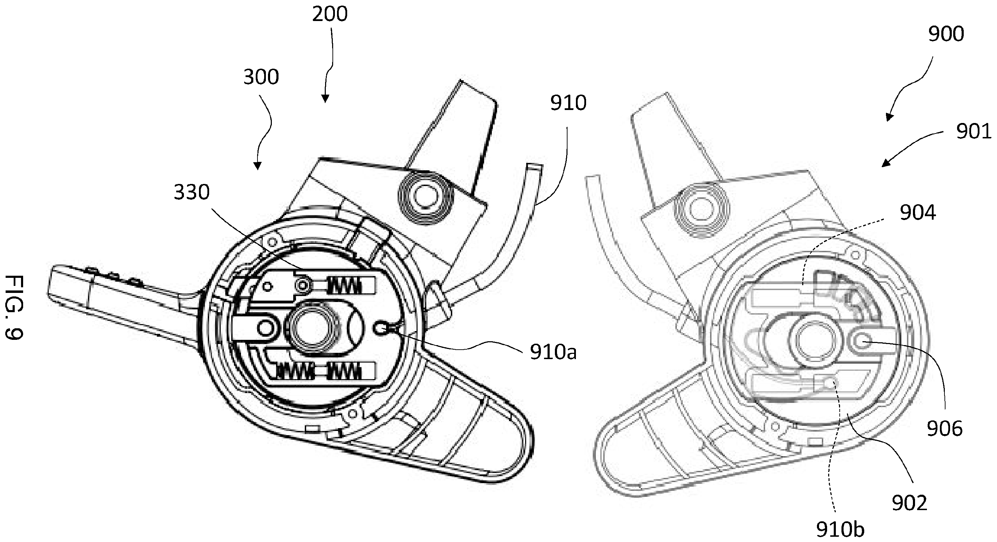

With reference to Figure 9, the second hub assembly 900 comprises the secondary brake assembly 901, which may comprise a secondary brake rotor 902 and a secondary brake carriage 904 including a secondary brake feature 906. The features of the brake carriage 330 and the brake feature 322 may apply equally to the second brake carrier and secondary brake feature. The secondary brake assembly 901 differs from the brake assembly in that the secondary brake rotor 902 may not comprise the ratchet teeth configured to be engaged by a ratchet latch formed on an actuator pedal. Instead, the pushchair 2 may comprise a brake cable 910 configured to extend between the brake assembly 300 and the secondary brake assembly 901. A first end 910a of the brake cable may be coupled, e.g. directly coupled, to the brake carriage 330 of the brake assembly and the second end 910b of the brake cable may be coupled to the secondary brake rotor 902. The brake assembly 300 and secondary brake assembly 901 may be configured such that when the brake carriage 330 moves from the first position to the second position, the brake carriage 300 pulls on the cable, which in turn pulls on the second brake rotor 902 to cause the second brake rotor to rotate. The secondary brake rotor may be configured to engage the secondary brake carriage 904, when the secondary brake rotor rotates, to cause the brake carriage to move from a second position of the second brake carriage to a first position of the second brake carriage, in which the secondary brake feature 906 engages a recess formed in a wheel supported by the second hub assembly 900. The secondary brake assembly 901 may thereby brake the wheel supported by the second hub assembly, in the same manner as described above, when the brake assembly 300 is actuated to brake the wheel of the pushchair supported by the hub assembly. The secondary brake rotor 902 may be configured to engage the secondary brake carriage 904 and cause the secondary brake carriage to move between the second and first positions using any desirable mechanism, such as a cam mechanism.

In other arrangements, the second end 910b of the brake cable may be coupled, e.g. directly coupled, to the secondary brake carriage 904, e.g. to move the secondary brake carriage 904 directly. In such arrangements, when the brake carriage 330 moves from the first position to the second position, the brake carriage 300 pulls on the cable, which in turn pulls on the secondary brake carriage 904, to cause the brake carriage to move from a second position of the second brake carriage to a first position of the second brake carriage, in which the secondary brake feature 906 engages a recess formed in a wheel supported by the second hub assembly 900. The secondary brake assembly 901 may thereby brake the wheel supported by the second hub assembly, in the same manner as described above, when the brake assembly 300 is actuated to brake the wheel of the pushchair supported by the hub assembly.

In further arrangements, the brake assembly 300 may be mechanically coupled to the secondary brake assembly 901 in any other way and/or the secondary brake assembly may be configured in any other way, such that when the brake carriage 330 moves from the first position to the second position, the secondary brake assembly 901 is operated to brake the wheel supported by the second hub assembly 900.

The following additional statements of invention also form part of the present specification:
Statement 1. A brake assembly for a pushchair, wherein the brake assembly comprises:
   an actuator pedal;
   a brake rotor arranged for rotation about a rotor axis, wherein the brake rotor comprises a cam feature;
   a brake carriage comprising a brake feature, wherein the brake carriage is movably supported within the brake assembly to be movable relative to the brake rotor in a direction with a component in a radial direction relative to the rotor axis, wherein the brake carriage comprises a complementary cam feature configured to engage the cam feature of the brake rotor, wherein the actuator pedal is configured to engage the brake rotor when the actuator pedal is actuated and rotate the brake rotor through a predetermined angle, and wherein the cam feature and complementary cam feature are configured to engage one another such that the brake carriage is moved alternatingly between a first position, in which the brake feature is configured to be disengaged from a recess formed in a wheel of the pushchair, and a second position, in which the brake feature is configured to engage the recess in the wheel, when the actuator pedal is actuated.
Statement 2. The brake assembly of statement 1, wherein the cam feature comprises a plurality of brake engagement portions and a plurality of brake disengagement portions spaced alternatingly about the rotor axis, wherein the adjacent brake engagement portions and the brake disengagement portions are spaced apart from one another by the predetermined angle.
Statement 3. The brake assembly of statement 1 or 2, wherein the complementary cam feature configured to engage the cam feature of the brake rotor at a position on the cam feature based on an angle of rotation of the brake rotor about the rotor axis.
Statement 4. The brake assembly of any of the preceding statements, wherein the cam feature and complementary cam feature are configured such that when the complementary cam feature engages one of the brake engagement portions, the brake carrier is in the second position and when the complementary cam feature engages one of the brake disengagement portions, the brake carrier is in the first position.
Statement 5. The brake assembly of any of the preceding statements, wherein the cam feature protrudes in an axial direction from an axial end surface of the brake rotor and wherein the complementary cam features are configured to engage the cam feature on an outside surface of the cam feature extending around the perimeter of the cam feature.
Statement 6. The brake assembly of any of the preceding statements, wherein the brake engagement portions comprise radially extending lobe shaped portions of the cam feature.
Statement 7. The brake assembly of any of the preceding statements, wherein each of the brake engagement portions and the brake disengagement portions comprises a cam surface portion arranged circumferentially about the brake rotor axis.
Statement 8. The brake assembly of any of the preceding statements, wherein a normal direction of the cam surface comprises at least a component parallel with a radial direction at each location on the cam surface about the rotor axis.
Statement 9. The brake assembly of any of the preceding statements, wherein the cam feature comprises 4 lobe/cycloid shaped protrusions.
Statement 10. The brake assembly of any of the preceding statements, wherein the brake feature is moveably relative to the brake carriage in a direction in which the brake carriage moves between the first position and the second position, and wherein the brake features is resiliently biased in a direction away from the first position towards the second position.
Statement 11. The brake assembly of any of the preceding statements, wherein the actuator pedal is pivotally coupled to a brake housing.
Statement 12. The brake assembly of any of the preceding statements, wherein the brake rotor is at least partially received within the brake housing.
Statement 13. The brake assembly of any of the preceding statements, wherein the brake carriage is at least partially received within brake housing.
Statement 14. The brake assembly of statement 13, wherein the brake assembly further comprises a brake indicator coupled the brake carriage, wherein the brake indicator is configured to protrudes through an opening in the brake housing when the brake carriage is in the second position.
Statement 15. The brake assembly of any of the preceding statements, wherein the brake rotor comprises a plurality of ratchet teeth spaced circumferentially about the rotor axis and wherein the actuator pedal comprises a rachet latch configured to engage one of the ratchet teeth to rotate the brake rotor through a predetermine angle when the actuator pedal is actuated.
Statement 16. The brake assembly of statement 15, wherein the brake carriage is biased into the first position.
Statement 17. A pushchair comprising the brake assembly of any of the preceding statements.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A brake assembly for a pushchair, wherein the brake assembly comprises:
an actuator pedal;
a brake rotor arranged for rotation about a rotor axis, wherein the brake rotor comprises a cam feature;
a brake carriage comprising a brake feature, wherein the brake carriage is movably supported within the brake assembly to be movable relative to the brake rotor in a direction with a component in a radial direction relative to the rotor axis, wherein the brake carriage comprises a complementary cam feature configured to engage the cam feature of the brake rotor, wherein the actuator pedal is configured to engage the brake rotor when the actuator pedal is actuated and rotate the brake rotor through a predetermined angle, and wherein the cam feature and complementary cam feature are configured to engage one another such that the brake carriage is moved alternatingly between a first position, in which the brake feature is configured to be disengaged from a recess formed in a wheel of the pushchair, and a second position, in which the brake feature is configured to engage the recess in the wheel, when the actuator pedal is actuated.

2. The brake assembly of claim 1, wherein the cam feature comprises a plurality of brake engagement portions and a plurality of brake disengagement portions spaced alternatingly about the rotor axis, wherein the adjacent brake engagement portions and the brake disengagement portions are spaced apart from one another by the predetermined angle.

3. The brake assembly of claim 1 or 2, wherein the complementary cam feature configured to engage the cam feature of the brake rotor at a position on the cam feature based on an angle of rotation of the brake rotor about the rotor axis.

4. The brake assembly of any of the preceding claims, wherein the cam feature and complementary cam feature are configured such that when the complementary cam feature engages one of the brake engagement portions, the brake carrier is in the second position and when the complementary cam feature engages one of the brake disengagement portions, the brake carrier is in the first position.

5. The brake assembly of any of the preceding claims, wherein the cam feature protrudes in an axial direction from an axial end surface of the brake rotor and wherein the complementary cam features are configured to engage the cam feature on an outside surface of the cam feature extending around the perimeter of the cam feature.

6. The brake assembly of any of the preceding claims, wherein the brake engagement portions comprise radially extending lobe shaped portions of the cam feature.

7. The brake assembly of any of the preceding claims, wherein each of the brake engagement portions and the brake disengagement portions comprises a cam surface portion arranged circumferentially about the brake rotor axis.

8. The brake assembly of any of the preceding claims, wherein a normal direction of the cam surface comprises at least a component parallel with a radial direction at each location on the cam surface about the rotor axis.

9. The brake assembly of any of the preceding claims, wherein the cam feature comprises 4 lobe/cycloid shaped protrusions.

10. The brake assembly of any of the preceding claims, wherein the brake feature is moveably relative to the brake carriage in a direction in which the brake carriage moves between the first position and the second position, and wherein the brake features is resiliently biased in a direction away from the first position towards the second position.

11. The brake assembly of any of the preceding claims, wherein the actuator pedal is pivotally coupled to a brake housing.

12. The brake assembly of any of the preceding claims, wherein the brake rotor is at least partially received within the brake housing.

13. The brake assembly of any of the preceding claims, wherein the brake carriage is at least partially received within brake housing, optionally wherein the brake assembly further comprises a brake indicator coupled the brake carriage, wherein the brake indicator is configured to protrude through an opening in the brake housing when the brake carriage is in the second position.

14. The brake assembly of any of the preceding claims, wherein the brake rotor comprises a plurality of ratchet teeth spaced circumferentially about the rotor axis and wherein the actuator pedal comprises a rachet latch configured to engage one of the ratchet teeth to rotate the brake rotor through a predetermine angle when the actuator pedal is actuated, optionally wherein the brake carriage is biased into the first position.

15. A pushchair comprising the brake assembly of any of the preceding claims.
